# EUROPEAN PATENT SPECIFICATION

(11) **EP 1 956 850 B1**
(45) Date of publication and mention of the grant of the patent: **27.07.2011**
(21) Application number: 07123130.2
(22) Date of filing: 13.12.2007
(51) Int. Cl.: H04Q 3/00

(54) **Method, system and signalling point for transporting DUPU message**
Verfahren, System und Signalvergabepunkt zum Transport einer DUPU-Nachricht
Procédé, système et point de signalisation pour transporter un message DUPU

(30) Priority: 12.02.2007 CN 200710084509
(43) Date of publication of application: 13.08.2008
(73) Proprietor: Huawei Technologies Co., Ltd., Longgang District, Shenzhen Guangdong 518129 (CN)
(72) Inventor: LIN, Lin, 518129, Guangdong (CN); SHAO, Jingli, 518129, Guangdong (CN); MO, Xiaojun, 518129, Guangdong (CN)
(74) Representative: Körber, Martin Hans

(56) References cited:
- EP-A- 1 643 777
- EP-A- 1 708 459
- BRIAN BIDULOCK OPENSS7 CORPORATION TOLGA ASVEREN SS8 NETWORKS INC: "M3UA SG-SG communication <draft-bidas-sigtran-sgsg-00.txt>; draft-bidas-sigtran-sgsg-00.txt" IETF STANDARD-WORKING-DRAFT, INTERNET ENGINEERING TASK FORCE, IETF, CH, 2 May 2002 (2002-05-02), XP015000260 ISSN: 0000-0004
- MORNEAULT CISCO SYSTEMS J PASTOR-BALBAS ERICSSON K: "Signaling System 7 (SS7) Message Transfer Part 3 (MTP3) - User Adaptation Layer (M3UA); draft-ietf-sigtran-rfc3332bis-03.txt;" IETF STANDARD-WORKING-DRAFT, INTERNET ENGINEERING TASK FORCE, IETF, CH, vol. sigtran, no. 3, May 2005 (2005-05), XP015038972 ISSN: 0000-0004

## Description

### Field of the Invention

The present invention relates to Signalling Network Management (SNM) technologies in telecommunications system, and particularly to a method, system and signalling point for transporting a Destination User Part Unavailable (DUPU) message.

### Background of the Invention

Signalling Transport (SIGTRAN) protocol stack is a standard of interconnection between Public Switched Telephone Network (PSTN) signalling network and Internet Protocol (IP) network, defined by the SIGTRAN workgroup for transport of conventional Switched Circuit Network (SCN) signalling over IP networks. The SIGTRAN protocol stack supports standard inter-layer primitive interfaces defined in the SCN signalling protocol hierarchy model to ensure utilization of the existing SCN signalling application without modification. The SIGTRAN protocol stack uses the standard IP transport protocol as the transmission bottom layer and satisfies the special transmission requirements of the SCN signalling by adding its own function.

The primary functions of the SIGTRAN protocol stack are transport and adaptation, in which the transport function is achieved by Stream Control Transmission Protocol (SCTP) and the adaptation function is achieved by either MTP2-User Adaptation Layer (M2UA) protocol which performs signalling link level functions or MTP3-User Adaptation Layer (M3UA) protocol which performs signalling network level functions. In the SNM, M3UA maintains network status through an SNM message. The SNM message includes: Destination Unavailable (DUNA), Destination Available (DAVA), Destination State Audit (DAUD), Signalling Congestion (SCON) and Destination User Part Unavailable (DUPU). The DUPU message is used for informing the originating signalling point that the User Part of destination signalling points are unavailable, which enables the originating signalling point to take corresponding actions.

The structure of DUPU message is shown in Table 1, including the following fields: a Network Appearance field, a Routing Context field, an Affected PC field, a User/Cause field and an INFO String field. Corresponding tags and lengths of the fields are also given in Table 1. The Affected PC field is used for indicating the affected destination signalling point code of the signalling point where the User Part is unavailable.

**Table 1**

| 0 | 1 | 2 | 3 |
|---|---|---|---|
| Tag = 0x0200 | | Length = 8 | |
| Network Appearance | | | |
| Tag = 0x0006 | | Length | |
| Routing Context | | | |
| Tag = 0x0012 | | Length = 8 | |
| mask = 0 | Affected PC | | |
| Tag = 0x0204 | | Length = 8 | |
| Cause | | User | |
| Tag = 0x0004 | | Length | |
| INFO String | | | |

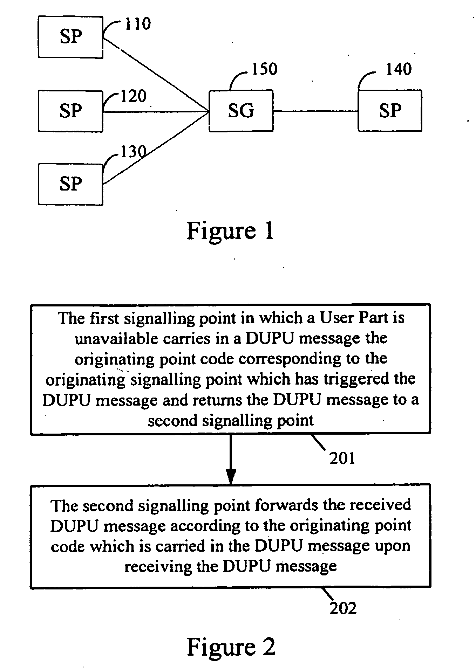

As shown in Table 1, a DUPU message may not be delivered properly since the destination of the message is not specified in the DUPU message. For example, in the network structure shown in Figure 1, the three Signalling Points (SPs), SP 110, SP 120 and SP 130, exchange messages with SP 140 via Signalling Gateway (SG) 150.When the M3UA layer of SP 140 receives a DATA message from SP 110 and detects that the DATA message may not be delivered to the designated upper-level user, i.e. a User Part is unavailable, SP 140 returns a DUPU message to SP 110 so that SP 110 may take corresponding actions. The Affected PC field of the DUPU message carries the Signalling Point Code (SPC) of SP 140. However, since the DUPU message does not indicate the destination signalling point which the DUPU message needs to reach, when the DUPU message returned by SP 140 reaches the SG 150, the SG 150 may be unable to determine the destination of the DUPU message, and as a result, the message may not reach SP 110 correctly. In such a case, SP 110 may never know the User Part failure on SP 140, and will continue sending the DATA message to the user of SP 140, and the DATA message will be forwarded to SP 140 and then be discarded, which not only increases the workload of SG 150 in the forwarding process, but also wastes transporting resources.

BRIAN BIDULOCK OPEN SS7 CORPORATION TOLGA ASVEREN SS8 NETWORKS INC: "M3UA SG-SG communication <draft-bidas-sigtran- sgsg-00.txt>;" IETF STANDARD-WORDING-DRAFT reveals a destination user part unavailable (DUPU) message containing a new field "Concerned PC: Destination PC" which has caused DUPU to be generated.

MORNEAULT CISCO SYSTEMS J PASTOR-BALBAS ERICSSON K: "Signaling System 7 (SS7) Message Transfer Part 3 (MTP3) - User Adaptation Layer (M3UA); draft-ietf-sigtran-rfc3332bis-03.txt;" reveals a DUPU message used by a signalling gateway process (SGP) to inform concerned application server processes (ASPs) that a remote peer MTP3-User Part at an SS7 node is unavailable.

### Summary of the Invention

The present invention provides a solution to one or all of the above mentioned problems through an inventive method, system and signalling point for transporting a DUPU message so that the DUPU message may be forwarded correctly.

A method for transporting a Destination User Part Unavailable (DUPU) message includes:
returning, by a first signalling point in which a User Part is unavailable, a DUPU message to a second signalling point, the DUPU message carrying a originating point code corresponding to the originating signalling point which has trigged the DUPU message;
forwarding, by the second signalling point, the DUPU message according to the originating point code which is carried along with the DUPU message upon receiving the DUPU message; and,
informing, by the originating signalling point, corresponding User layer of the originating signalling point that the user of the first signalling point is unavailable, and the User layer of the originating signalling stopping sending messages to the first signalling point;
wherein the carrying along with the DUPU message the originating point code by the first signalling point comprises:
   extending, by the first signalling point, the INFO String field of the DUPU message to carry the originating point code and sending the DUPU message carrying the originating point code in the extended INFO String field.

The forwarding of the DUPU message by the second signalling point includes:
judging, by the second signalling point, whether the originating point code which is carried along with the DUPU message is identical with the signalling point code (SPC) of the second signalling point; and
handling the received DUPU message locally if the originating point code is identical with the SPC of the second signalling point, or
forwarding the received DUPU message to the signalling point corresponding to the originating point code if the originating point code is not identical with the SPC of the second signalling point.
A system for transporting a Destination User Part Unavailable (DUPU) message includes: a first signalling point and a second signalling point;
the first signalling point is adapted to carry along with a DUPU message the origination point code corresponding to the originating signalling point which has triggered the DUPU message when a User Part is unavailable, and to return the DUPU message to the second signalling point;
the second signalling point is adapted to receive the DUPU message from the first signalling point, and to forward the DUPU message according to the originating point code which is carried along with the DUPU message;
wherein, the originating signalling point is adapted to inform corresponding User layer of the originating signalling point that the user of the first signalling point is unavailable, and the User layer of the originating signalling stops sending messages to the first signalling point;
the carrying along with the DUPU message the originating point code by the first signalling point comprises:
   extending, by the first signalling point, the INFO String field of the DUPU message to carry the originating point code and sending the DUPU message carrying the originating point code in the extended INFO String field.The second signalling point includes: a sending and receiving unit and a forwarding unit, and,
   the sending and receiving unit is adapted to receive the DUPU message from the first signalling point, and to send the DUPU message to the forwarding unit; and
   the forwarding unit is adapted to forward the DUPU message according to the originating point code which is carried along with the DUPU message.

The forwarding unit includes: a judging unit, a message handling unit and a message forwarding unit, and,
the judging unit is adapted to judge whether the originating point code which is carried along with the DUPU message is identical with the signalling point code of the local signalling point, to send the DUPU message to the message handling unit if the originating point code is identical with the signalling point code of the local signalling point, otherwise to send the DUPU message to the message forwarding unit;
the message handling unit is adapted to handle the DUPU message locally; and
the message forwarding unit is adapted to forward the DUPU message to the signalling point corresponding to the originating point code.

A general signalling point according to the present invention includes: a sending and receiving unit and a forwarding unit;
the sending and receiving unit is adapted to receive a Destination User Part Unavailable (DUPU) message, and send the DUPU message to the forwarding unit;
the forwarding unit is adapted to forward the DUPU message according to the originating point code which is carried along with the DUPU message;
wherein, the originating signalling point is adapted to inform corresponding User layer of the originating signalling point that the user of the first signalling point is unavailable, and the User layer of the originating signalling stops sending messages to the first signalling point; and
the carrying along with the DUPU message the originating point code by the first signalling point comprises:
extending, by the first signalling point, the INFO String field of the DUPU message to carry the originating point code and sending the DUPU message carrying the originating point code in the extended INFO String field.

The forwarding unit includes: a judging unit, a message handling unit and a message forwarding unit;
the judging unit is adapted to judge whether the originating point code which is carried along with the DUPU message is identical with the signalling point code (SPC) of the local signalling point, send the DUPU message to the message handling unit if the originating point code is identical with the SPC of the local signalling point, otherwise send the DUPU message to the message forwarding unit;
the message handling unit is adapted to handle the DUPU message locally; and
the message forwarding unit is adapted to forward the DUPU message to the signalling point corresponding to the originating point code.

The signalling point further includes:
a failure handling unit, adapted to carry along with the DUPU message the originating point code corresponding to the originating signalling point which has triggered the DUPU message, and returning the DUPU message when a User Part is unavailable.

In accordance with the embodiments of the present invention, it can be seen that a first signalling point in which a User Part is unavailable not only returns a DUPU message, but also carries the originating point code corresponding to the originating signalling point which has triggered the DUPU message in the DUPU message to be sent. Therefore a second signalling point may learn the destination signalling point corresponding to the DUPU message upon receiving the DUPU message, and thus the DUPU message may be correctly forwarded. When the DUPU message is forwarded to the correct signalling point which triggered the message, the signalling point may inform corresponding User layer and thus the User layer may stop sending messages to the User of the first signalling point in which the User Part is unavailable. Therefore, the workload in forwarding messages is lightened, and waste of transport resources is reduced.

### Brief Description of the Drawings

Figure 1 is a schematic diagram illustrating the network structure in the prior art.
Figure 2 is a flow chart illustrating the method for transporting DUPU message in accordance with an embodiment of the present invention.
Figure 3 is a schematic diagram illustrating the structure of the system for transporting DUPU message in accordance with an embodiment of the present invention.
Figure 4 is a schematic diagram illustrating the structure of the signalling point in accordance with an embodiment of the present invention.
Figure 5 is a flow chart illustrating the method for transporting DUPU message in accordance with an embodiment of the present invention.
Figure 6 is a flow chart illustrating the method for transporting DUPU message in accordance with an embodiment of the present invention.

### Embodiments of the Invention

In order to make the technical solutions and advantages of the present invention clearer, the present invention is hereinafter described in detail with reference to the drawings and embodiments.

As shown in Figure 2, the method for transporting a DUPU message in accordance with an embodiment of the present invention comprises the following steps as indicated in the blocks of Figure 2.

Block 201: A first signalling point in which a User Part is unavailable returns a DUPU message to a second signalling point. An originating point code corresponding to the originating signalling point which has triggered the DUPU message is carried along with the DUPU message.

Block 202: Upon receiving the DUPU message, the second signalling point forwards the DUPU message according to the originating point code which is carried along with the message.

The step of receiving and forwarding according to block 202 further includes: the second signalling point judges whether the originating point code which is carried along with the message is identical with the SPC of the second, or local, signalling point, and handles the received DUPU message locally if the originating point code is identical with the SPC of the local signalling point, otherwise forwards the received DUPU message to the signalling point which corresponds to the originating point code.

The second signalling point is a signalling point sending or forwarding a DATA message to the first signalling point. When the first signalling point detects a failure in delivering message from the second signalling point to the designated upper-layer user, the first signalling point returns the DUPU message to the second signalling point.

The above mentioned first and second signalling point may be any signalling point SP or any Signalling Gateway SG.

The above method of carrying the originating point code corresponding to the originating signalling point which has triggered the DUPU message may be implemented by extending the DUPU message. There are multiple ways of extending the DUPU message, and the following are some illustrative examples.

As shown in Table 2, a field is added to the existing DUPU message and is used for carrying the originating point code corresponding to the originating signalling point which has triggered the DUPU message. A first signalling point in which a User Part is unavailable includes the originating point code in the newly added field and sends the message to the second signalling point.

**Table 2**

| 0 | 1 | 2 | 3 |
|---|---|---|---|
| Tag = 0x0200 | | Length = 8 | |
| Network Appearance | | | |
| Tag = 0x0006 | | Length | |
| Routing Context | | | |
| Tag = 0x0012 | | Length = 8 | |
| mask = 0 | Affected PC | | |
| Tag = 0x0206 | | Length = 8 | |
| Reserved | Concerned DPC | | |
| Tag = 0x0204 | | Length = 8 | |
| Cause | | User | |
| Tag = 0x0004 | | Length | |
| INFO String | | | |

In Table 2, the Concerned Destination Point Code (Concerned DPC) field is the newly added field used for carrying the originating point code. The tag of the field is 0x0206 and the size of the field is 8 bytes. The Concerned DPC field is clearly defined in M3UA protocol, and is used in an SCON message for forwarding the SCON message. In accordance with an embodiment of the present invention, the Concerned DPC field is added to the DUPU message for forwarding the DUPU message.

It should be noted that the newly added Concerned DPC field may be placed at any part of the DUPU message and is not limited to the position shown in Table 2.

Another proposed embodiment teaches that the INFO String field in a DUPU message may also be extended and a first signalling point may send the extended INFO String field carrying the originating point code corresponding to the originating signalling point which has triggered the DUPU message. According to the definition in M3UA protocol, the INFO String field may carry any 8-bit ASCII string that makes sense and the length of the field may range between 0 and 255, leaving room for internal debugging and future extension. The field may be extended to be compatible with old-fashioned equipment. The old-fashioned equipment which does not support the extension may simply leave the INFO String field intact without changing the original procedures.

There are also multiple ways of extending the INFO String field. For example, according to the message format defined in M3UA, the DUPU message may be extended into a format of a fixed-size, as shown in Table 3, or be extended into a format with an indefinite size, as shown in Table 4. The format of fixed-size means the size of the Concerned DPC field is a fixed value, and the format with indefinite size means the size of the Concerned DPC field is variable. The extension may even go beyond the message format defined in M3UA into the message format shown in Table 5.

**Table 3**

| 0 | 1 | 2 | 3 |
|---|---|---|---|
| | | | |
| Tag = 0x0200 | | Length = 8 | |
| | | | |
| Network Appearance | | | |
| Tag = 0x0006 | | Length | |
| | | | |
| Routing Context | | | |
| Tag = 0x0012 | | Length = 8 | |
| mask = 0 | Affected PC | | |
| | | | |
| Tag = 0x0204 | | Length = 8 | |
| | | | |
| Cause | | User | |
| | | | |
| Tag = 0x0004 | | Length = 12 | |
| Concerned DPC Tag | | | |
| Concerned DPC | | | |

**Table 4**

| 0 | 1 | 2 | 3 |
|---|---|---|---|
| Tag = 0x0200 | | Length = 8 | |
| Network Appearance | | | |
| Tag = 0x0006 | | Length | |
| Routing Context | | | |
| Tag = 0x0012 | | Length = 8 | |
| mask = 0 | Affected PC | | |
| Tag = 0x0204 | | Length = 8 | |
| Cause | | User | |
| Tag = 0x0004 | | Length = 12 | |
| Concerned DPC Tag | | Length = 8 | |
| Concerned DPC | | | |

**Table 5**

| 0 | 1 | 2 | 3 |
|---|---|---|---|
| Tag = 0x0200 | | Length = 8 | |
| Network Appearance | | | |
| Tag = 0x0006 | | Length | |
| Routing Context | | | |
| Tag = 0x0012 | | Length = 8 | |
| mask = 0 | Affected PC | | |
| Tag = 0x0204 | | Length = 8 | |
| Cause | | User | |
| Tag = 0x0004 | | Length = 8 | |
| Reserved | Concerned DPC | | |

An embodiment is described hereinafter to further illustrate the method provided by the present invention.

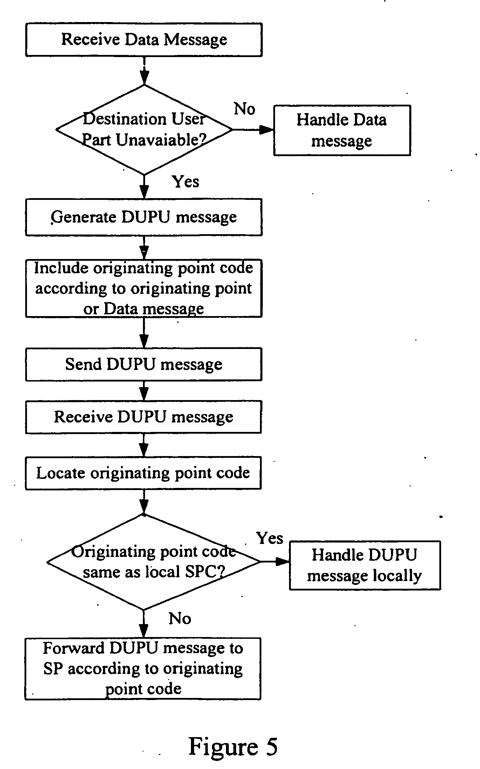

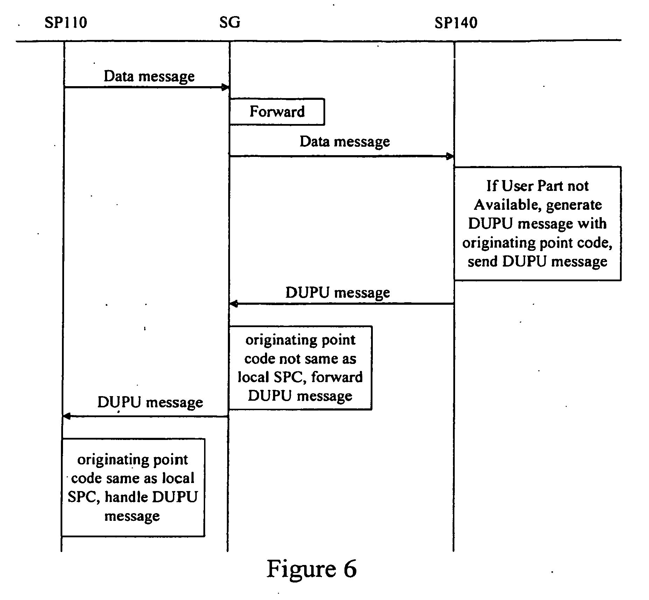

In the network structure as shown in Figure 1 and flow charts as shown in Figure 5 and Figure 6, when SP 140 receives a DATA message from SP 110 via the SG 150 and detects a failure in transporting the message to the upper-layer user, i.e., a User Part is unavailable, SP 140 sends a DUPU message to the SG 150. The DUPU message carries the originating point code corresponding to the originating signalling point which has triggered the DUPU message, i.e., the code of the originating signalling point, SP 110, of the DATA message, in the Concerned DPC field for example. The Affected PC field of the DUPU message shall carry the SPC of SP 140.

Upon receiving the DUPU message from SP 140, the SG 150 first locates and parses the Concerned DPC field, determines whether the originating point code carried in the Concerned DPC field is identical with the SPC of the SG 150. If the originating point code is identical with the SPC of the SG 150, the SG 150 handles the DUPU message locally and informs the corresponding local User layer of the SG 150 that the user of SP 140 is unavailable according to the User field contained in the DUPU message, and the User layer of the SG 150 receives the information and stops sending the DATA message to the user of SP 140 accordingly. If the originating point code is not identical with the SPC of the SG 150, the SG 150 forwards the received DUPU message to the signalling point corresponding to the originating point code which is contained in the DUPU message, e.g. an SP or an SG. In this embodiment, the SG 150 will forward the DUPU message from SP 140 to SP 110. Upon receiving the forwarded DUPU message, SP 110 informs corresponding local User layer that the user of SP 140 is unavailable according to the User field in the DUPU message. The User layer of SP 110 will stop sending the DATA message to the user of SP 140 when the information is received.

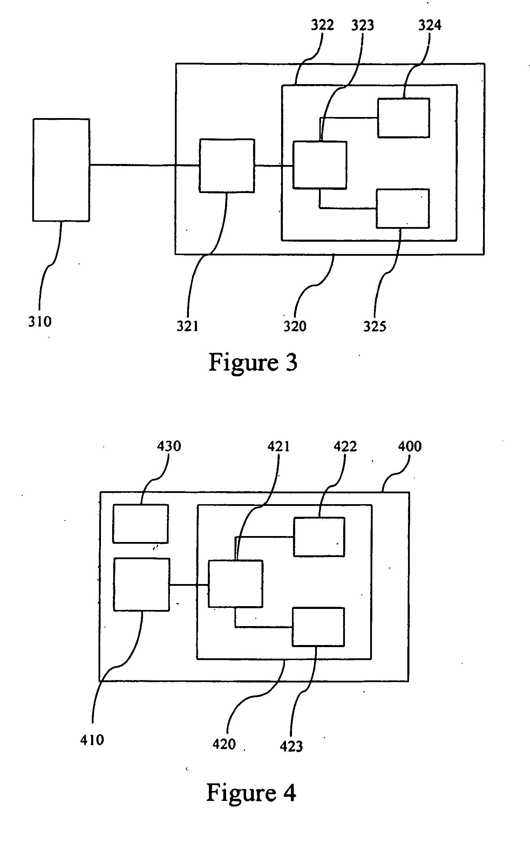

The present invention also provides a system for transporting a DUPU message. As shown in Figure 3, the system mainly comprises: a first signalling point 310 and a second signalling point 320. The first signalling point 310 is used to return a DUPU message when a User Part is unavailable. The DUPU message carries the originating point code corresponding to the originating signalling point which has triggered the DUPU message. The second signalling point 320 is used to receive the DUPU message from the first signalling point 310, and to forward the received DUPU message according to the originating point code which is carried along with the message.

The second signalling point 320 further includes: a sending and receiving unit 321 and a forwarding unit 322. The sending and receiving unit 321 is used to receive the DUPU message from the first signalling point 310 and to send the received DUPU message to the forwarding unit 322. The forwarding unit 322 is used to forward the received DUPU message according to the originating point code which is contained in the message.

The forwarding unit 322 further includes: a judging unit 323, a message handling unit 324 and a message forwarding unit 325. The judging unit 323 is used to judge whether the originating point code which is contained in the received DUPU message is identical with the SPC of the second, or local signalling point 320, to deliver the received DUPU message to the message handling unit 324 if the originating point code is identical with the SPC of the local signalling point, and to deliver the received DUPU message to the message forwarding unit 325 if the originating point code is not identical with the SPC of the local signalling point. The message handling unit 324 is used to handle the received DUPU message locally. The message forwarding unit 325 is used to forward the received DUPU message to the signalling point corresponding to the originating point code.

Embodiments of the present invention also provide a signalling point. As shown in Figure 4, the signalling point 400 includes: a sending and a receiving unit 410 and a forwarding unit 420. The sending and receiving unit 410 is used to receive the DUPU message and sending the received DUPU message to the forwarding unit 420. The forwarding unit 420 is used to forward the received DUPU message according to the originating point code which is carried along with the DUPU message.

The forwarding unit 420 further includes: a judging unit 421, a message handling unit 422 and a message forwarding unit 423. The judging unit 421 is used to judge whether the originating point code which is contained in the received DUPU message is identical with the SPC of the local signalling point, to deliver the received DUPU message to the message handling unit 422 if the originating point code is identical with the SPC of the local signalling point, and to deliver the received DUPU message to the message forwarding unit 423 if the originating point code is not identical with the SPC of the local signalling point. The message handling unit is used to handle the received DUPU message locally. The message forwarding unit is used to forward the received DUPU message to the signalling point corresponding to the originating point code.

The signalling point further includes: a failure handling unit 430, for returning a DUPU message carrying originating point code corresponding to the originating signalling point which has triggered the DUPU message when a User Part is unavailable.

The purpose, technical solution and merits of the present invention have been further described in detail with the above description. It should be appreciated that the foregoing is not for use in limiting the present invention. Any modification, equivalent substitution, improvement within the principle of the present invention should be covered in the protection scope of the present invention as defined by the accompanying claims.

## Claims

1. A method for transporting a Destination User Part Unavailable, DUPU, message, comprising:
returning, by a first signalling point in which a User Part is unavailable, a DUPU message to a second signalling point, the DUPU message carrying a originating point code corresponding to the originating signalling point which has triggered the DUPU message; **characterised by**
forwarding, by the second signalling point, the DUPU message according to the originating point code which is carried along with the DUPU message upon receiving the DUPU message; and,
informing, by the originating signalling point, corresponding User layer of the originating signalling point that the user of the first signalling point is unavailable, and the User layer of the originating signalling point stopping sending messages to the first signalling point;
wherein the carrying along with the DUPU message the originating point code by the first signalling point comprises:
extending, by the first signalling point, the INFO String field of the DUPU message to carry the originating point code and sending the DUPU message carrying the originating point code in the extended INFO String field.

2. The method of Claim 1, **characterised in that** forwarding the DUPU message by the second signalling point comprises:
judging, by the second signalling point, whether the originating point code which is carried along with the DUPU message is identical with the signalling point code ,SPC, of the second signalling point; and
handling the received DUPU message locally if the originating point code is identical with the SPC of the second signalling point, or
forwarding the received DUPU message to the signalling point corresponding to the originating point code if the originating point code is not identical with the SPC of the second signalling point.

3. A system for transporting Destination User Part Unavailable, DUPU, message, comprising: a first signalling point (140, 310) and a second signalling point (150, 320), wherein:
the first signalling point (140, 310) is adapted to carry along with a DUPU message the originating point code corresponding to the originating signalling point (110, 120, 130) which has triggered the DUPU message when a User Part is unavailable, and to return the DUPU message to the second signalling point (150, 320); and **characterised by**
the second signalling point (150, 320) is adapted to receive the DUPU message from the first signalling point (140, 310), and to forward the DUPU message according to the originating point code which is carried along with the DUPU message;
wherein, the originating signalling point is adapted to inform corresponding User layer of the originating signalling point that the user of the first signalling point is unavailable, and the User layer of the originating signalling point stops sending messages to the first signalling point; and
the carrying along with the DUPU message the originating point code by the first signalling point comprises:
extending, by the first signalling point, the INFO String field of the DUPU message to carry the originating point code and sending the DUPU message carrying the originating point code in the extended INFO String field.

4. The system in Claim 3, **characterised in that** the second signalling point (150, 320) comprises: a sending and receiving unit (321) and a forwarding unit (322), and that,
the sending and receiving unit (321) is adapted to receive the DUPU message from the first signalling point (140, 310), and to send the DUPU message to the forwarding unit (322); and that
the forwarding unit (322) is adapted to forward the DUPU message according to the originating point code which is carried along with the DUPU message.

5. The system in Claim 3, **characterised in that** the forwarding unit comprises: a judging unit (323), a message handling unit (324) and a message forwarding unit (325), wherein,
the judging unit (323) is adapted to judge whether the originating point code which is carried along with the DUPU message is identical with the signalling point code of the local signalling point, to send the DUPU message to the message handling unit(324) if the originating point code is identical with the signalling point code of the local signalling point, otherwise to send the DUPU message to the message forwarding unit (325);
the message handling unit (324) is adapted to handle the DUPU message locally; and
the message forwarding unit (325) is adapted to forward the DUPU message to the signalling point corresponding to the originating point code.

6. A signalling point (400), comprising a sending and receiving unit (410) and a forwarding unit (420), wherein,
the sending and receiving unit (410) is adapted to receive a Destination User Part Unavailable ,DUPU, message from a first signalling point, and to send the DUPU message to the forwarding unit (420); and **characterised by**:
the forwarding unit (420) is adapted to forward the DUPU message according to the originating point code which is carried along with the DUPU message;
wherein, the originating signalling point is adapted to inform corresponding User layer of the originating signalling point that the user of the first signalling point is unavailable, and the User layer of the originating signalling point stops sending messages to the first signalling point; and
the carrying along with the DUPU message the originating point code by the first signalling point comprises:
extending, by the first signalling point, the INFO String field of the DUPU message to carry the originating point code and sending the DUPU message carrying the originating point code in the extended INFO String field.

7. The signalling point in Claim 6, **characterised in that** the forwarding unit (420) comprises: a judging unit (421), a message handling unit (422) and a message forwarding unit (423);
that the judging unit (421) is adapted to judge whether the originating point code which is carried along with the DUPU message is identical with the signalling point code, SPC, of the local signalling point, to send the DUPU message to the message handling unit(422) if the originating point code is identical with the SPC of the local signalling point, otherwise to send the DUPU message to the message forwarding unit (423);
that the message handling unit (422) is adapted to handle the DUPU message locally; and
that the message forwarding unit (423) is adapted to forward the DUPU message to the signalling point corresponding to the originating point code.

8. The signalling point of Claim 6, **characterised in that** it further comprises a failure handling unit (430), adapted to carry along with the DUPU message the originating point code corresponding to the originating signalling point which has triggered the DUPU message, and returning the DUPU message when a User Part is unavailable.

## Patentansprüche

1. Verfahren zum Transportieren einer Zielteilnehmer-nicht-erreichbar-Nachricht, DUPU-Nachricht, das Folgendes umfasst:
Zurückleiten einer DUPU-Nachricht mittels eines ersten Signalgebungspunkts, in dem ein Teilnehmer nicht erreichbar ist, zu einem zweiten Signalgebungspunkt, wobei die DUPU-Nachricht einen Ausgangspunkt-Code trägt, der dem Ausgangssignalgebungspunkt entspricht, der die DUPU-Nachricht ausgelöst hat; **gekennzeichnet durch**
Weiterleiten der DUPU-Nachricht mittels des zweiten Signalgebungspunkts in Übereinstimmung mit dem Ausgangspunkt-Code, der zusammen mit der DUPU-Nachricht befördert wird, bei Empfang der DUPU-Nachricht; und
Informieren der entsprechenden Anwenderschicht des Ausgangssignalgebungspunkts mittels des Ausgangssignalgebungspunkts, dass der Anwender des ersten Signalgebungspunkts nicht erreichbar ist, wobei die Anwenderschicht des Ausgangssignalgebungspunktes das Senden von Nachrichten zu dem ersten Signalgebungspunkt beendet;
wobei das Befördern des Ausgangspunkt-Codes zusammen mit der DUPU-Nachricht durch den ersten Signalgebungspunkt Folgendes umfasst:
Erweitern des INFO-String-Feldes der DUPU-Nachricht mittels des ersten Signalgebungspunkts, um den Ausgangspunkt-Code zu befördern, und Senden der DUPU-Nachricht, die den Ausgangspunkt-Code in dem erweiterten INFO-String-Feld befördert.

2. Verfahren nach Anspruch 1, **dadurch gekennzeichnet, dass** das Weiterleiten der DUPU-Nachricht durch den zweiten Signalgebungspunkt Folgendes umfasst:
Beurteilen mittels des zweiten Signalgebungspunkts, ob der Ausgangspunkt-Code, der mit der DUPU-Nachricht befördert wird, mit dem Signalgebungspunkt-Code SPC des zweiten Signalgebungspunkts identisch ist; und
lokales Handhaben der empfangenen DUPU-Nachricht, falls der Ausgangspunkt-Code mit dem SPC des zweiten Signalgebungspunkts identisch ist, oder
Weiterleiten der empfangenen DUPU-Nachricht zu dem Signalgebungspunkt, der dem Ausgangspunkt-Code entspricht, falls der Ausgangspunkt-Code nicht mit dem SPC des zweiten Signalgebungspunkts identisch ist.

3. System zum Transportieren einer Zielteilnehmer-nicht-erreichbar-Nachricht, DUPU-Nachricht, das Folgendes umfasst: einen ersten Signalgebungspunkt (140, 310) und einen zweiten Signalgebungspunkt (150, 320), wobei:
der erste Signalgebungspunkt (140, 310) dazu ausgelegt ist, zusammen mit einer DUPU-Nachricht den Ausgangspunkt-Code, der dem Ausgangssignalgebungspunkt (110, 120, 130) entspricht, der die DUPU-Nachricht ausgelöst hat, zu befördern, wenn ein Teilnehmer nicht erreichbar ist, und die DUPU-Nachricht zu dem zweiten Signalgebungspunkt (150, 320) zurückzuleiten; und **dadurch gekennzeichnet, dass** der zweite Signalgebungspunkt (150, 320) dazu ausgelegt ist, die DUPU-Nachricht von dem ersten Signalgebungspunkt (140, 310) zu empfangen und die DUPU-Nachricht in Übereinstimmung mit dem Ausgangspunkt-Code, der zusammen mit der DUPU-Nachricht befördert wird, weiterzuleiten;
wobei der Ausgangssignalgebungspunkt dazu ausgelegt ist, eine entsprechende Anwenderschicht des Ausgangssignalgebungspunkts zu informieren, dass der Anwender des ersten Signalgebungspunkts nicht erreichbar ist, wobei die Anwenderschicht des Ausgangssignalgebungspunktes das Senden von Nachrichten zu dem ersten Signalgebungspunkt beendet; und
das Befördern zusammen mit der DUPU-Nachricht des Ausgangspunkt-Codes durch den ersten Signalgebungspunkt Folgendes umfasst:
Erweitern des INFO-String-Feldes der DUPU-Nachricht mittels des ersten Signalgebungspunkts, um den Ausgangspunkt-Code zu befördern, und Senden der DUPU-Nachricht, die den Ausgangspunkt-Code in dem erweiterten INFO-String-Feld befördert.

4. System nach Anspruch 3, **dadurch gekennzeichnet, dass** der zweite Signalgebungspunkt (150, 320) Folgendes umfasst: eine Sende- und Empfangseinheit (321) und eine Weiterleitungseinheit (322), und dass
die Sende- und Empfangseinheit (321) dazu ausgelegt ist, die DUPU-Nachricht von dem ersten Signalgebungspunkt (140, 310) zu empfangen und die DUPU-Nachricht zu der Weiterleitungseinheit (322) zu senden; und dass
die Weiterleitungseinheit (322) dazu ausgelegt ist, die DUPU-Nachricht in Übereinstimmung mit dem Ausgangspunkt-Code, der zusammen mit der DUPU-Nachricht befördert wird, weiterzuleiten.

5. System nach Anspruch 3, **dadurch gekennzeichnet, dass** die Weiterleitungseinheit Folgendes umfasst: eine Beurteilungseinheit (323), eine Nachrichtenhandhabungseinheit (324) und eine Nachrichtenweiterleitungseinheit (325), wobei
die Beurteilungseinheit (323) dazu ausgelegt ist zu beurteilen, ob der Ausgangspunkt-Code, der zusammen mit der DUPU-Nachricht befördert wird, mit dem Signalgebungspunkt-Code des lokalen Signalgebungspunkts identisch ist, um die DUPU-Nachricht zu der Nachrichtenhandhabungseinheit (324) zu senden, falls der Ausgangspunkt-Code mit dem Signalgebungspunkt-Code des lokalen Signalgebungspunkts identisch ist, und um andernfalls die DUPU-Nachricht zu der Nachrichtenweiterleitungseinheit (325) zu senden;
wobei die Nachrichtenhandhabungseinheit (324) dazu ausgelegt ist, die DUPU-Nachricht lokal zu handhaben; und
die Nachrichtenweiterleitungseinheit (325) dazu ausgelegt ist, die DUPU-Nachricht zu dem Signalgebungspunkt, der dem Ausgangspunkt-Code entspricht, weiterzuleiten.

6. Signalgebungspunkt (400), der eine Sende- und Empfangseinheit (410) und eine Weiterleitungseinheit (420) umfasst, wobei
die Sende- und Empfangseinheit (410) dazu ausgelegt ist, eine Zielteilnehmer-nicht-erreichbar-Nachricht, DUPU-Nachricht, von einem ersten Signalgebungspunkt zu empfangen und um die DUPU-Nachricht zu der Weiterleitungseinheit (420) zu senden; und **dadurch gekennzeichnet, dass**:
die Weiterleitungseinheit (420) dazu ausgelegt ist, die DUPU-Nachricht in Übereinstimmung mit dem Ausgangspunkt-Code, der zusammen mit der DUPU-Nachricht befördert wird, weiterzuleiten;
wobei der Ausgangssignalgebungspunkt dazu ausgelegt ist, eine entsprechende Anwenderschicht des Ausgangssignalgebungspunkts zu informieren, dass der Anwender des ersten Signalgebungspunkts nicht erreichbar ist, wobei die Anwenderschicht des Ausgangssignalgebungspunktes das Senden von Nachrichten zu dem ersten Signalgebungspunkt beendet; und
das Befördern des Ausgangspunkt-Codes zusammen mit der DUPU-Nachricht mittels des ersten Signalgebungspunkts Folgendes umfasst:
Erweitern des INFO-String-Feldes der DUPU-Nachricht mittels des ersten Signalgebungspunkts, um den Ausgangspunkt-Code zu befördern und Senden der DUPU-Nachricht, die den Ausgangspunkt-Code in dem erweiterten INFO-String-Feld befördert.

7. Signalgebungspunkt nach Anspruch 6, **dadurch gekennzeichnet, dass** die Weiterleitungseinheit (420) Folgendes umfasst: eine Beurteilungseinheit (421), eine Nachrichtenhandhabungseinheit (422) und eine Nachrichtenweiterleitungseinheit (423);
dass die Beurteilungseinheit (421) dazu ausgelegt ist zu beurteilen, ob der Ausgangspunkt-Code, der zusammen mit der DUPU-Nachricht befördert wird, mit dem Signalgebungspunkt-Code SPC des lokalen Signalgebungspunkts identisch ist, um die DUPU-Nachricht zu der Nachrichtenhandhabungseinheit (422) zu senden, falls der Ausgangspunkt-Code mit dem SPC des lokalen Signalgebungspunkts identisch ist, und um andernfalls die DUPU-Nachricht zu der Nachrichtenweiterleitungseinheit (423) zu senden;
dass die Nachrichtenhandhabungseinheit (422) dazu ausgelegt ist, die DUPU-Nachricht lokal zu handhaben; und
dass die Nachrichtenweiterleitungseinheit (423) dazu ausgelegt ist, die DUPU-Nachricht zu dem Signalgebungspunkt, der dem Ausgangspunkt-Code entspricht, weiterzuleiten.

8. Signalgebungspunkt nach Anspruch 6, **dadurch gekennzeichnet, dass** er ferner eine Fehlerhandhabungseinheit (430) umfasst, die dazu ausgelegt ist, den Ausgangspunkt-Code, der dem Ausgangssignalgebungspunkt entspricht, der die DUPU-Nachricht ausgelöst hat, zusammen mit der DUPU-Nachricht zu befördern und die DUPU-Nachricht zurückzuleiten, wenn ein Teilnehmer nicht erreichbar ist.

## Revendications

1. Procédé pour transporter un message d'Indisponibilité de Partie Utilisateur de Destination (DUPU (Destination User Part Unavailable)), consistant à :
renvoyer, par un premier point de signalisation dans lequel une Partie Utilisateur est indisponible, un message DUPU à un second point de signalisation, le message DUPU acheminant un code de point d'origine correspondant au point de signalisation d'origine qui a déclenché le message DUPU ;
**caractérisé par** le fait de
faire en sorte que le second point de signalisation réexpédie le message DUPU conformément au code de point d'origine qui est acheminé en association avec le message DUPU lors de la réception du message DUPU ; et
faire en sorte que le point de signalisation d'origine informe une couche Utilisateur correspondante du point de signalisation d'origine du fait que l'utilisateur du premier point de signalisation est indisponible, et que la couche Utilisateur du point de la signalisation d'origine cesse d'envoyer des messages au premier point de signalisation ;
dans lequel l'acheminement en association avec le message DUPU du code de point d'origine par le premier point de signalisation consiste à :
faire en sorte que le premier point de signalisation étende le champ de Chaîne INFO du message DUPU afin d'acheminer le code de point d'origine et envoyer le message DUPU acheminant le code de point d'origine dans le champ de Chaîne INFO étendu.

2. Procédé selon la revendication 1, **caractérisé en ce que** la réexpédition du message DUPU par le second point de signalisation consiste à :
faire en sorte que le second point de signalisation évalue si le code de point d'origine qui est acheminé en association avec le message DUPU est identique ou non au code de point de signalisation SPC (Signalling Point Code) du second point de signalisation ; et
traiter le message DUPU reçu localement si le code de point d'origine est identique au SPC du second point de signalisation, ou
réexpédier le message DUPU reçu au point de signalisation correspondant au code de point d'origine si le code de point d'origine n'est pas identique au SPC du second point de signalisation.

3. Système pour transporter un message d'Indisponibilité de Partie Utilisateur de Destination (DUPU), comprenant un premier point de signalisation (140, 310) et un second point de signalisation (150, 320), dans lequel :
le premier point de signalisation (140, 310) est conçu pour acheminer en association avec un message DUPU le code de point d'origine correspondant au point de signalisation d'origine (110, 120, 130) qui a déclenché le message DUPU lorsqu'une Partie Utilisateur est indisponible, et pour renvoyer le message DUPU au second point de signalisation (150, 320) ; et **caractérisé en ce que** :
le second point de signalisation (150, 320) est conçu pour recevoir le message DUPU du premier point de signalisation (140, 310) et pour réexpédier le message DUPU conformément au code de point d'origine qui est acheminé en association avec le message DUPU ;
dans lequel le point de signalisation d'origine est conçu pour informer une couche Utilisateur correspondante du point de signalisation d'origine du fait que l'utilisateur du premier point de signalisation est indisponible, et la couche Utilisateur du point de signalisation d'origine cesse d'envoyer des messages au premier point de signalisation ; et
l'acheminement en association avec le message DUPU du code de point d'origine par le premier point de signalisation consiste à :
faire en sorte que le premier point de signalisation étende le champ de Chaîne INFO du message DUPU afin d'acheminer le code de point d'origine et envoyer le message DUPU acheminant le code de point d'origine dans le champ de Chaîne INFO étendu.

4. Système selon la revendication 3, **caractérisé en ce que** le second point de signalisation (150, 320) comprend : une unité d'envoi et de réception (321) et une unité de réexpédition (322), et **en ce que**
l'unité d'envoi et de réception (321) est conçue pour recevoir le message DUPU du premier point de signalisation (140, 310) et pour envoyer le message DUPU à l'unité de réexpédition (322) ; et **en ce que**
l'unité de réexpédition (322) est conçue pour réexpédier le message DUPU conformément au code de point d'origine qui est acheminé en association avec le message DUPU.

5. Système selon la revendication 3, **caractérisé en ce que** l'unité de réexpédition comprend :
une unité d'évaluation (323), une unité de gestion de messages (324) et une unité de réexpédition de messages (325), dans lequel :
l'unité d'évaluation (323) est conçue pour évaluer si le code de point d'origine qui est acheminé en association avec le message DUPU est identique ou non au code de point de signalisation du point de signalisation local, pour envoyer le message DUPU à l'unité de gestion de messages (324) si le code de point d'origine est identique au code de point de signalisation du point de signalisation local et, dans le cas contraire,
pour envoyer le message DUPU à l'unité de réexpédition de messages (325) ;
l'unité de gestion de messages (324) est conçue pour gérer localement le message DUPU ; et
l'unité de réexpédition de messages (325) est conçue pour réexpédier le message DUPU au point de signalisation correspondant au code de point d'origine.

6. Point de signalisation (400), comprenant une unité d'envoi et de réception (410) et une unité de réexpédition (420), dans lequel :
l'unité d'envoi et de réception (410) est conçue pour recevoir d'un premier point de signalisation un message d'Indisponibilité de Partie Utilisateur de Destination (DUPU) et pour envoyer le message DUPU à l'unité de réexpédition (420) ; et
**caractérisé en ce que** :
l'unité de réexpédition (420) est conçue pour réexpédier le message DUPU conformément au code de point d'origine qui est acheminé en association avec le message DUPU ;
dans lequel le point de signalisation d'origine est conçu pour informer une couche Utilisateur correspondante du point de signalisation d'origine du fait que l'utilisateur du premier point de signalisation est indisponible, et la couche Utilisateur du point de signalisation d'origine cesse d'envoyer des messages au premier point de signalisation ; et
l'acheminement en association avec le message DUPU du code de point d'origine par le premier point de signalisation consiste à :
faire en sorte que le premier point de signalisation étende le champ de Chaîne INFO du message DUPU afin d'acheminer le code de point d'origine et envoyer le message DUPU acheminant le code de point d'origine dans le champ de Chaîne INFO étendu.

7. Point de signalisation selon la revendication 6, **caractérisé en ce que** l'unité de réexpédition (420) comprend : une unité d'évaluation (421), une unité de gestion de messages (422) et une unité de réexpédition de messages (423) ;
**en ce que** l'unité d'évaluation (421) est conçue pour évaluer si le code de point d'origine qui est acheminé en association avec le message DUPU est identique ou non au code de point de signalisation SPC du point de signalisation local, pour envoyer le message DUPU à l'unité de gestion de messages (422) si le code de point d'origine est identique au SPC du point de signalisation local et, dans le cas contraire, pour envoyer le message DUPU à l'unité de réexpédition de messages (423) ;
**en ce que** l'unité de gestion de messages (422) est conçue pour gérer localement le message DUPU ; et
**en ce que** l'unité de réexpédition de messages (423) est conçue pour réexpédier le message DUPU au point de signalisation correspondant au code de point d'origine.

8. Point de signalisation selon la revendication 6, **caractérisé en ce qu'**il comprend en outre une unité de gestion de défauts (430), conçue pour acheminer en association avec le message DUPU le code de point d'origine correspondant au point de signalisation d'origine qui a déclenché le message DUPU et pour renvoyer le message DUPU lorsqu'une Partie Utilisateur est indisponible.
